# EUROPÄISCHE PATENTSCHRIFT

(11) **EP 2 831 421 B1**
(45) Veröffentlichungstag und Bekanntmachung des Hinweises auf die Patenterteilung: **10.08.2016**
(21) Anmeldenummer: 13727510.3
(22) Anmeldetag: 21.03.2013
(51) Int. Cl.: F04C 15/00, F04C 2/107

(54) **BOLZENGELENK FÜR EINE EXZENTERSCHNECKENPUMPE**
PIN JOINT FOR AN ECCENTRIC SCREW PUMP
ACCOUPLEMENT À PIVOT POUR POMPES À VIS EXCENTRIQUE

(30) Priorität: 27.03.2012 DE 102012006025
(43) Veröffentlichungstag der Anmeldung: 04.02.2015
(73) Patentinhaber: NETZSCH Pumpen & Systeme GmbH, 95100 Selb (DE)
(72) Erfinder: GROTH, Michael, 84524 Neuötting (DE); DENK, Reinhard, 84453 Mühldorf (DE)
(86) Internationale Anmeldenummer: PCT/DE2013/100108
(87) Internationale Veröffentlichungsnummer: WO 2013/143535

(56) Entgegenhaltungen:
- DE-A1- 10 116 641
- DE-A1- 19 927 315
- DE-A1-102006 058 166
- GB-A- 1 039 429

## Beschreibung

Die Erfindung betrifft ein offenes Bolzengelenk und ein Verfahren zum Betreiben dieses Bolzengelenks für Exzenterschneckenpumpen im Hygienebereich. Das Gelenk hat einen inneren und einen äußeren Gelenkkopf, wobei jeder Gelenkkopf mindestens eine diametrale Bohrung aufweist, die von einem Bolzen durchdrungen wird, der an beiden Enden mit je einer Kappe versehen ist. Der innere kugelartige Gelenkkopf hat im Bereich des Bolzens einen konvexen Bohrungsverlauf.

Aus der DE 10 2006 058 166 A1 geht ein Bolzengelenk für eine Exzenterschneckenpumpe hervor. Das Bolzengelenk ist von einer Manschette umgeben um das Schmiermittel im Bereich des Gelenks zu halten. Beim Austausch des Schmiermittels kann der Innenraum der Gelenke, zur Entfernung des Schmiermittels, zusätzlich jeweils einen zentrischen Schmiermittelkanal pro Gelenk aufweisen. Da es beim Austausch von Schmiermittel nicht darauf ankommt das Gelenk vollständig zu reinigen mag diese Gestaltung des Gelenks ausreichend sein.

Aus der DE 101 16 641 A1 ist ein Bolzengelenk mit einem Teil einer Antriebswelle und einem Teil einer Kupplungsstange zu entnehmen. Ein Endbereich der Antriebswelle ist mit einer koaxialen Einsteckaufnahme versehen. In diese Einsteckaufnahme ragt der Kupplungszapfen der Kupplungsstange. Zur Reinigung des Innenraums der Einsteckaufnahme weißt dessen Wandung zwei diametrale Spülbohrungen auf.

Aufgabe der vorliegenden Erfindung ist es ein Bolzengelenk zu konzipieren, dass auch für den Hygienebereich einsetzbar ist, wobei insbesondere auf die schwierige, jedoch erforderliche Reinigung der Bohrung des inneren Gelenkkopfs, die einen Gelenkbolzen aufnimmt, abgezielt wird.

Die erfindungsmäße technische Lösung der Aufgabe wird durch die Merkmale des Anspruchs 1 gelöst. Weiterbildungen der Erfindung sind den abhängigen Unteransprüchen zu entnehmen.

Entsprechend einer ersten erfindungsgemäßen Gestaltung des Bolzengelenks weist ein kugelförmiger Gelenkkopf an seiner Stirnseite mindestens zwei Kanäle auf, die exzentrisch zur Längsachse angeordnet sind.

In einer bevorzugten Ausführung des Bolzengelenks sind die Kanäle von der Längsachse der Antriebswelle aus in Richtung zur Außenseite des Bolzengelenks um einen Winkel von 10° bis 30° nach außen geneigt. Damit strömt die Reinigungsflüssigkeit im achsnahen Bereich der Antriebswelle in den inneren Gelenkkopf ein und fließt radial versetzt zum Einlass an der Innenseite des inneren Gelenkkopfs. Die Reinigung des oder der Gelenke erfolgt demnach von der Längsachse der Gelenkwelle aus radial vom inneren Gelenkkopf zum äußeren Gelenkkopf.

Damit die Spülflüssigkeit in jeden Bereich des Spaltes zwischen dem Bolzen und dem inneren und äußeren Gelenkkopf gelangt erstreckt sich der Bolzen in seiner Länge um mindestens 5% des Kappendurchmessers über den Außendurchmesser der äußeren Gelenkköpfe. Die Verlängerung des Bolzens bewirkt, dass sich der Bolzen im Gelenk radial bewegen kann und somit eine relative Bewegungskomponente in den Gelenkspalten ergibt, die zur Zirkulierung der Reinigungsflüssigkeit führt. Der Querschnitt des/der Bolzen ist im Vergleich zum Querschnitt der Bohrungen reduziert.

Zur weiteren Verbesserung der Strömung der Reinigungsflüssigkeit sind die Kanäle für die Reinigungsflüssigkeit so angeordnet dass sie beim inneren Gelenkkopf jeweils im Bereich des Bolzens münden in dem dessen Bohrung von der Längsachse der Gelenkwellenachse aus radial in Richtung des jeweils äußeren Gelenkkopfes divergiert.

Die Reinigung des erfindungsgemäßen offenen Bolzengelenks erfolgt während der Rotation des oder der Gelenke, wobei die Spülflüssigkeit aufgrund der exzentrischen Taumelbewegung der Gelenke einen radialwirkenden Druck auf die Spülflüssigkeit ausübt. Die Taumelbewegung verursacht ein ständiges Verringern und Vergrößern des zylindrischen Ringraums zwischen dem Bolzen und der Bohrung des inneren Gelenkkopfes. Somit stellt jede Gelenkkopf-Bolzenverbindung eine eigene Pumpe für die Spülflüssigkeit dar. Da die Spülflüssigkeit exzentrisch in das Gelenk eingeführt wird, wo der Spalt zwischen Gelenkkopf und Bolzen am geringsten ist, ist die Menge an Spülflüssigkeit entsprechend dem erfindungsgemäßen Bolzengelenk wesentlich größer pro Zeiteinheit. Die Spülflüssigkeit wird vom inneren Bereich in den äußeren Bereich des Bolzengelenks verdrängt.

Nachfolgend wird die Erfindung anhand schematischer Zeichnungen erläutert.

Es zeigt:
Fig. 1 eine Exzenterschneckenpumpe mit zwei offenen Bolzengelenken
Fig. 2 einen Ausschnitt mit einem Bolzengelenk mit geneigt angeordneten Spülflüssigkeitsbohrungen
Fig. 3 einen Ausschnitt mit einem Bolzengelenk mit parallelen Spülflüssigkeitsbohrungen
Fig. 4 eine Draufsicht auf den Druckflansch der Exzenterschneckenpumpe

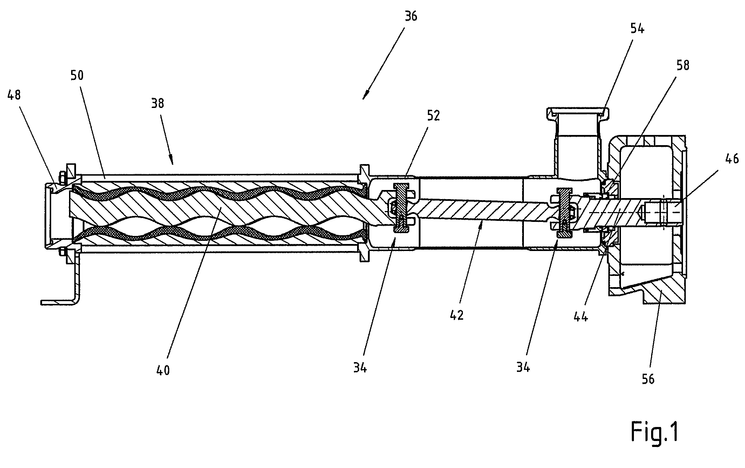

Die Fig. 1 zeigt eine Exzenterschneckenpumpe 36 mit einem Stator 38 in dem sich ein Rotor 40 befindet. Der Rotor 40 bewegt sich exzentrisch im Stator 38 und steht hierzu über eine Gelenkwelle 42 mit einer Zwischenwelle 44 und diese mit der Antriebswelle 46 eines nicht dargestellten Antriebs in Verbindung. An einem Ende des Stators sitzt ein Druckflansch 48 der über Schrauben 50 mit dem Pumpengehäuse 52 verspannt ist. An der Oberseite des Pumpengehäuses 52 sitzt der Saugstutzen 54 über den das zu fördernde Medium in das Pumpengehäuse 52 eintritt.

Der Saugstutzen 54 befindet sich in unmittelbarer Nähe zum Dichtungsgehäuse 56 und zur Dichtung 58, die als Gleitringdichtung gestaltet sein kann. Der Saugstutzen 54 ist tangential zum oder am Pumpengehäuse 52 angeordnet. Die Dichtung 58 sitzt auf der Zwischenwelle 44, die fest mit der Antriebswelle 46 in Verbindung steht. Die Gelenkwelle 42 steht über Gelenke, hier Bolzengelenke 34 sowohl mit der Zwischenwelle 42 wie auch mit dem Rotor 40 drehfest in Verbindung.

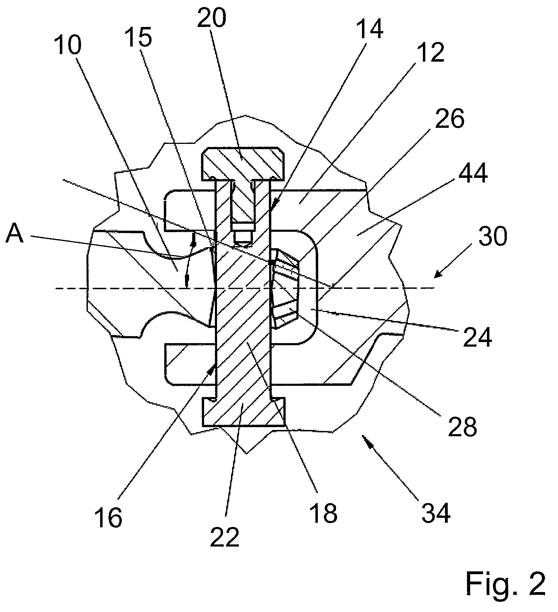

In Fig. 2 wird eine Variante eines Bolzengelenks 34 dargestellt. Das Beispiel zeigt einen inneren Gelenkkopf 10 und einen äußeren Gelenkkopf 12. Beide Gelenkköpfe 10, 12 sind mit Bohrungen 14, 15, 16, versehen durch die sich ein Bolzen 18 erstreckt. Der Bolzen ist zwischen seinen Kappen 20,22 zylindrisch gestaltet. Die Bohrung 15 dagegen ist im Bereich des Bolzens konvex nach innen gerundet sodass der Bohrungsverlauf von innen nach außen divergiert, sprich sich erweitert. Diese Erweiterung der Bohrung 15 verleiht dem Bolzen 15 die notwendige Bewegungsfreiheit gegenüber dem inneren Gelenkkopf 10. Rotiert das Bolzengelenk 34 so vollzieht der innere Gelenkkopf 10 eine Taumelbewegung die durch den exzentrisch rotierenden Rotor 40 entsteht, der diese Bewegung über die Gelenkwelle auf beide Bolzengelenke 34 überträgt.

An der Stirnseite 24 des inneren Gelenkkopfes 10 beginnen zwei Kanäle 26,28 die sich bis in die diametrale Bohrung 15 erstrecken. Durch diese Bohrungen gelangt Spülflüssigkeit aus dem Pumpengehäuse gezielt in die Bohrung 15 und entfernt hier Reste des geförderten Mediums. Da die Bohrungen nicht zentral entlang der Längsachse 30 der Zwischenwelle 44 verlaufen, sondern unter einem Winkel A von 10° bis 30° unterstützt diese radial gerichtete Strömung die Abförderung bzw. Reinigung der Bohrung 15. Aufgrund der Taumelbewegung des Gelenkkopfes 10 drücken die sich radial erweiternden Innenflächen der Bohrung 15 die Spülflüssigkeit aus dem Innenbereich des Gelenkkopfes 10. Die Kanäle im Kopfende 60 des Gelenkkopfes münden mit Abstand zur Längsachse 30 im Bereich der Bohrung 15 im bereits divergierende Flächenbereich.

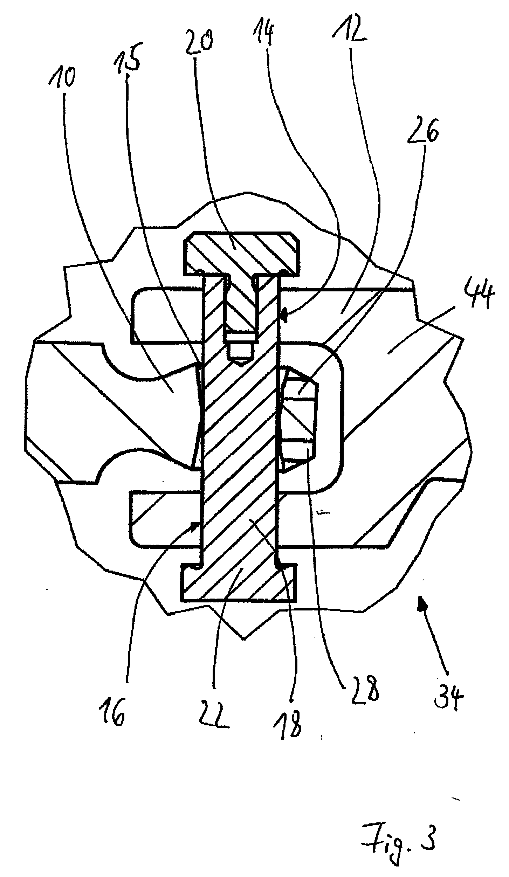

Eine weitere Möglichkeit zur Reinigung eines Bolzengelenks mit Spülflüssigkeit ist in Fig. 3 dargestellt. Auch hier weist der Gelenkkopf 10 eine diametral verlaufende Bohrung 15 auf und auch in diesem Ausführungsbeispiel erweitert sich die Bohrung 15 von der Längsachse 30 radial in Richtung zum äußeren Gelenkkopf 12. Die Bohrungen 26, 28, verlaufen parallel zur Längsachse 30 des Gelenkkopfes 10 und der Zwischenwelle 44. Innerhalb der Bohrung 15 im Gelenkkopf 10 münden die Kanäle 26, 28 im Bereich der Bohrung 15 der sich radial in Richtung zum äußeren Gelenkkopf 12 erweitert. Die Zirkulation der Spülflüssigkeit im Bereich der diametralen Bohrung 15 wird durch die Bewegung des Bolzens 18 erreicht. Der Bolzen 18 besitzt zwei Kappen 20, 22 die je nach Lage des Bolzengelenks 34 an der jeweiligen oberen Seite des Bolzengelenks 34 anliegen. Durch die Relativbewegung des Bolzens 18 entlang seiner Längsachse werden auch die Spalte in den Bohrungen 14, 16 gespült. Die Kappe 20 ist Teil einer Schraube die Teil des Bolzens 18 ist.

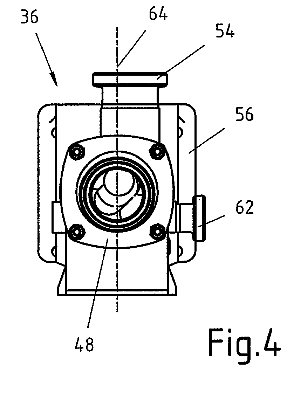

Eine Draufsicht auf den Druckflansch 48 der Exzenterschneckenpumpe 36 gibt Fig. 4 wieder. Aus dieser Ansicht ist auch der tangential angeordnete Saugstutzen 54 im Pumpengehäuse zu entnehmen. Durch diese tangentiale Anordnung des Saugstutzens bekommt die Spülflüssigkeit beim Eintritt in das Pumpengehäuse, auch als Pumpeneinlassgehäuse bezeichnet, eine drallförmige Strömungskomponente und spült damit bereits im Einlassbereich die Innenseite des Pumpengehäuses bis hin zum Auslass 62 entlang einer sich von selbst einstellenden spiralförmigen Strömung.

### Bezugsziffernliste

- 10: Gelenkkopf
- 12: Gelenkkopf
- 14: Bohrung
- 15: Bohrung
- 16: Bohrung
- 18: Bolzen
- 20: Kappe
- 22: Kappe
- 24: Stirnseite
- 26: Kanal
- 28: Kanal
- 30: Längsachse
- 34: Bolzengelenk
- 36: Exzenterschneckenpumpe
- 38: Stator
- 40: Rotor
- 42: Gelenkwelle
- 44: Zwischenwelle
- 46: Antriebswelle
- 48: Druckflansch
- 50: Schrauben
- 52: Pumpengehäuse
- 54: Saugstutzen
- 56: Dichtungsgehäuse
- 58: Dichtung
- 62: Auslass
- 64: Achse

## Patentansprüche

1. Offenes Bolzengelenk (32) für eine Exzenterschneckenpumpe (34) im Hygienebereich mit einem inneren Gelenkkopf (10) einer Gelenkwelle (42) und einem äußeren Gelenkkopf (12) einer Antriebswelle (44), wobei
jeder Gelenkkopf (10,12) mindestens eine diametrale Bohrung (14,15,16) aufweist, die von einem Bolzen (18) durchdrungen wird, der an beiden Enden mit je einer Kappe (20,22) versehen ist **dadurch gekennzeichnet, dass** der innere Gelenkkopf (10) an seiner Stirnseite (24) mit mindestens zwei Kanälen (26,28) versehen ist, die exzentrisch zur Längsachse (30) der Gelenkwelle (42) angeordnet sind, wobei sich die Kanäle (26,28) von der Längsachse der Antriebswelle (44) in Richtung zur Außenseite des Bolzengelenks jeweils um einen Winkel A von 10° bis 30° und sich bis in die diametrale Bohrung (15) erstrecken.

2. Offenes Bolzengelenk nach Anspruch 1, **dadurch gekennzeichnet, dass** sich die Bolzen (18) um mindestens 5% des Querschnitts der Kappen 20, 22 über die äußeren Gelenkköpfe (12) des Bolzengelenks 32 hinaus erstrecken.

3. Offenes Bolzengelenk nach Anspruch 1 oder 2, **dadurch gekennzeichnet, dass** der Querschnitt des Bolzens (18) kleiner ist als die diametralen Bohrungen (14, 15, 16) der Gelenkköpfe (10, 12) und somit in der Bohrung (14, 15, 16) beweglich ist.

4. Offenes Bolzengelenk nach Anspruch 1 bis 3, **dadurch gekennzeichnet, dass** die Kanäle (26,28) in einen Bereich zwischen dem inneren Gelenkkopf (10) und dem Bolzen (18) münden, in dem Flächen des inneren Gelenkkopfes (10) in Richtung des äußeren Gelenkkopfes (12) divergieren.

## Claims

1. Open revolute joint (32) for an eccentric screw pump (34) in the field of sanitation with an internal joint head (10) of a joint shaft (42) and an outer joint head (12) of a drive shaft (44) wherein
each joint head (10, 12) has at least one diametrical boring (14, 15, 16), through which a bolt (18) provided with a cap (20, 22) at each of both ends penetrates, **characterised in that** at its front side (24) the inner joint head (10) is provided with at least two channels (26, 28) which are arranged eccentrically with regard to the longitudinal axis (30) of the joint shaft (42), wherein the channels (26, 28) each extend from the longitudinal axis of the drive shaft (44) in the direction of the outer side of the revolute joint at an angle A of 10° to 30° and up to the diametrical boring (15).

2. Open revolute joint according to claim 1 **characterised in that** the bolts (18) extend out by at least 5% of the cross-section of the caps 20, 22 beyond the outer joint heads (12) of the revolute joint 32.

3. Open revolute joint according to claim 1 or 2 **characterised in that** the cross-section of the bolt (18) is smaller than the diametrical borings (14, 15, 16) of the joint heads (10, 12) and is thus movable within the boring (14, 15, 16).

4. Open revolute joint according to claims 1 to 3 **characterised in that** the channels (26, 28) open into an area between the inner joint head (10) and the bolt (18), in which surfaces of the inner joint head (10) diverge in the direction of the outer joint head (12).

## Revendications

1. Articulation (32) à tourillons ouverte pour une pompe (34) à vis sans fin excentrique dans le domaine de l'hygiène, avec une tête d'articulation (10) interne d'un arbre (42) à joints de cardan et une tête d'articulation (12) externe d'un arbre d'entraînement (44),
chaque tête d'articulation (10, 12) comportant au moins un perçage (14, 15, 16) diamétral, qui est traversé par un tourillon (18) qui sur les deux extrémités est muni de chaque fois un capuchon (20, 22), **caractérisée en ce que** sur sa face frontale (24), la tête d'articulation (10) interne est munie d'au moins deux canaux (26, 28) qui sont placés de manière excentrique par rapport à l'axe longitudinal (30) de l'arbre (42) à joints de cardan, les canaux (26, 28) s'étendant à partir de l'axe longitudinal de l'arbre (44) d'entraînement en direction de la face extérieure de l'articulation à tourillon, chaque fois de la valeur d'un angle A de 10° à 30° et jusque dans le perçage (15) diamétral.

2. Articulation à tourillons ouverte selon la revendication 1, **caractérisée en ce que** les tourillons (18) s'étendent de la valeur d'au moins 5 % de la section transversale des capuchons (20, 22) au-delà des têtes d'articulation (12) externes de l'articulation (32) à tourillons.

3. Articulation à tourillons ouverte selon la revendication 1 ou la revendication 2, **caractérisée en ce que** la section transversale du tourillon (18) est inférieure aux perçages (14, 15, 16) diamétraux des têtes d'articulation (10, 12) et donc mobile dans le perçage (14, 15, 16).

4. Articulation à tourillons ouverte selon la revendication 1 à 3, **caractérisée en ce que** les canaux (26, 28) débouchent dans une région entre la tête d'articulation (10) interne et le tourillon (18), dans laquelle des surfaces de la tête d'articulation (10) interne divergent en direction de la tête d'articulation (12) externe.
